Europäisches Patentamt

European Patent Office

Office européen des brevets

(19)

(11) **EP 0 531 364 B1**

(12) **EUROPEAN PATENT SPECIFICATION**

(45) Date of publication and mention
of the grant of the patent:
**17.06.1998 Bulletin 1998/25**

(21) Application number: **91909897.0**

(22) Date of filing: **30.04.1991**

(51) Int Cl.6: **C01B 33/20**, C01B 39/00,
C02F 1/42, C10G 1/00,
C10G 11/05, C10G 35/095

(86) International application number:
**PCT/US91/02972**

(87) International publication number:
**WO 91/18833 (12.12.1991 Gazette 1991/28)**

(54) **LARGE-PORED MOLECULAR SIEVES CONTAINING AT LEAST ONE OCTAHEDRAL SITE AND TETRAHEDRAL SITES OF AT LEAST ONE TYPE**

GROSSPORIGE MOLEKULARSIEBE MIT MINDENSTENS EINER OCTAHEDRISCHEN POSITION UND TETRAHEDRISCHEN POSITIONEN VON MINDESTENS EINER TYPE

TAMIS MOLECULAIRE A LARGES PORES CONTENANT AU MOINS UN SITE OCTAEDRIQUE ET DES SITES TETRAEDRIQUES D'AU MOINS UN TYPE

(84) Designated Contracting States:
**AT BE CH DE DK ES FR GB GR IT LI LU NL SE**

(30) Priority: **28.05.1990 US 527624**

(43) Date of publication of application:
**17.03.1993 Bulletin 1993/11**

(73) Proprietor: **ENGELHARD CORPORATION
Iselin, New Jersey 08830-0770 (US)**

(72) Inventors:
• **KUZNICKI, Steven M.
Whitehouse Station, NJ 08889 (US)**

• **THRUSH, Kathleen, A.
Easton, PA 18042 (US)**

(74) Representative: **Geering, Keith Edwin
REDDIE & GROSE
16 Theobalds Road
London WC1X 8PL (GB)**

(56) References cited:
**EP-A- 0 405 978          US-A- 3 769 386
US-A- 4 707 345          US-A- 4 853 202
US-A- 4 891 197          US-A- 4 917 876**

**Description**

BACKGROUND OF THE INVENTION

1. Field of the Invention

This invention relates to new crystalline molecular sieve zeolite compositions, having a pore size of from about 6 to at least 10 Angstrom units, containing at least one metal capable of forming an octahedral site in the framework structure, methods for preparing the same; uses thereof such as organic compound conversions therewith, especially hydrocarbon conversions, ion exchange applications, removal of metal ions from solutions thereof, removal of gases in both a selective and non-selective mode, including storage of the same; and removal of hydrocarbons from a non-hydrocarbon media, e.g., water. The novel materials of this invention possess a framework which contains at least one metal in an octahedrally coordinated state and at least one other metal in the framework in a tetrahedrally coordinated state.

2. Background of the Invention and Prior Art

Since the discovery by Milton and coworkers (U. S. 2,882,243 and U. S. 2,882,244) in the late 1950's that aluminosilicate systems could be induced to form uniformly porous, internally charged crystals, analogous to molecular sieve zeolites found in nature, the properties cf synthetic aluminosilicate zeolite molecular sieves nave formed the basis of numerous commercially important catalytic, adsorptive and ion-exchange applications. This high degree of utility is the result of a unique combination of high surface area and uniform porosity dictated by the "framework" structure of the zeolite crystals coupled with the electrostatically charged sites induced by tetrahedrally coordinated $Al^{+3}$ Thus, a large number of "active" charged sites are readily accessible to molecules of the proper size and geometry for adsorptive catalytic interactions. Further, since charge compensating cations are electrostatically and not covalently bound to the aluminosilicate framework, they are generally exchangeable for other cations with different inherent properties. This offers wide latitude for modification of active sites whereby specific adsorbents and catalysts can be taylor made for a given utility.

In the publication "Zeolite Molecular Sieves", Chapter 2, 1974, D.W. Breck hypothesized that perhaps 1,000 aluminosilicate zeolite framework structures are theoretically possible, but to date only approximately 150 have been identified. While compositional nuances have been described in publications such as U.S. 4,524,055, U.S. 4,603,040 and U.S. 4,506,899, totally new aluminossilicate framework structures are being discovered at a negligible rate. Of particular importance to fundamental progress in the catalysis of relatively large hydrocarbon molecules, especially fluid cracking operations, is the fact that it has a been a generation since the discovery of any new large pored aluminosilicate zeolite.

With slow progress in the discovery of new wide pored aluminosilicate based molecular sieves, researchers have taken various approaches to replace aluminium or silicon in zeolite synthesis in the hope of generating either new zeolite-like framework structures or inducing the formation of qualitatively different active sites than are available in analogous aluminosilicate based materials. While progress of academic interest has been made from different approaches, little success has been achieved in discovering new wide pore molecular sieve zeolites.

It has been believed for a generation that phosphorus could be incorporated, to varying degrees, in zeolite type aluminosilicate frameworks. In the more recent past (JACS 104 pp.1146 (1982); Proceedings of the 7th International Zeolite Conference, pp. 103-112, 1986) E.M. Flanigan and coworkers have demonstrated the preparation of pure aluminophosphate based molecular sieves of a wide variety of structures. However, the site inducing $Al^{+3}$ is essentially neutralised by the $P^{-5}$, imparting a -1 charge to the framework. Thus, while a new class of "molecular sieves" was created, they are not zeolites in the fundamental sense since they lack "active" charged sites.

Realizing this inherent utility limiting deficiency, for the past few years of the molecular sieve research community has emphasized the synthesis of mixed aluminosilicate-metal oxide and mixed aluminophosphate-metal oxide framework systems. While this approach to overcoming the slow progress in aluminosilicate zeolite synthesis has generated approximately 200 new compositions, all of which suffer either from the site removing effect of incorporated $P^{-5}$ or the site diluting effect of incorporating effectively neutral tetrahedral -4 metals into an aluminosilicate type framework. As a result, extensive research by the molecular sieve research community has failed to demonstrate significant utility for any of these materials.

A series of zeolite-like "framework" silicates have been prosulated, some of which have larger uniform pores that are observed for aluminosilicate zeolites. (W.M. Meier, Proceedings of the 7th International Zeolite Conference, pp. 13-22 (1986).) While this particular synthesis approach produces materials which, by definition, totally lack active, charged sites, back implementation after synthesis would not appear out of the question although little work appears in the open literature of this topic.

Another and most straightforward means of potentially generating new structures or qualitatively different sitres than those induced by aluminum would be direct substitution of some other charge inducing species for aluminum in zeolite-like structures. To date the most notably successful example of this approach appears to be boron in the case of ZSM-5 analogs, although iron has also been claimed in similar materials. (EPA 68, 796 (1983), Taramasso et al; Proceedings of the 5th International Zeolite Conference; pp. 40-48 (1980)); J.W.Ball et al; Proceedings of the 7th International Zeolite Conference; pp. 137-144 (1986); U.S. 4,280,305 to Kouennowen et al. Unfortunately, the low levels of incorporation of the species substituting for aluminum usually leaves doubt if the species are occluded or framework incorporated.

In 1967, Young in U.S. 3,329,481 reported that the synthesis of charge bearing (exchangeable) titanium silicates under conditions similar to aluminosilicate zeolite formation was possible if the titanium was present as a "critical reagent" -III peroxo species. While these materials were called "titanium zeolites" no evidence was presented beyond some questionable x-ray diffraction (XRD) patterns and his claim has generally been dismissed by the zeolite research community. (D.W. Breck, Zeolite Molecular Sieves, p.322 (1974); R.M. Barrer, Hydrothermal Chemistry of Zeoliteds, p.293 (1982); G. Perego et al, Proceedings of the 7th International Zeolite Conference, p.129 (1986).) For all but one end member of this series of materials (denoted TS materials), the presented XRD patterns indicate phases too dense to be molecular sieves. In the case of the one questionable end member (denoted TS-26), the XRD pattern might possibly be interpreted as a small pored zeolite, although without additional supporting evidence, this appears extremely questionable.

A naturally occurring alkaline titanosilicate identified as "Zorite" was discovered in trace quantities on the Kola Peninsula in 1972 (A.N. Merlkov et al; Zapiski Vses Mineralog. Obshch., pages 54-62 (1973)). The published XRD pattern was challenged and a proposed structure reported in a later article entitled "The OD Structure of Zorite", Sandomirrkii et al, Sov. Phys. Crystallogr. 24 (6), November-Dec 1979. pages 686-693.

No further reports on "titanium zeolites" appeared in the open literature until 1983 when trace levels of tetrahedral Ti(IV) were reported in a ZSM-5 analog. (M. Taramasso et al; U.S. Patent 4,410,501 (1983); G. Perego et al; Proceedings of the 7th International Zeolite Conference; p.129 (1986).) A similar claim appeared from researchers in mid-1985 (EPA 132,550 (1985).) More recently, the research community reported mixed aluminosilicate-titanium(IV) (EPA 179,876 (1985); EPA 181,884 (1985) structures which, along with TAPO (EPA 121,232 (1985) systems, appear to have no possibility of active titanium sites because of the titanium coordination. As such, their utility is highly questionable.

That charge bearing, exchangeable titanium silicates are possible is inferred not only from the existence of exchangeable alkali titanates and the early work disclosed in U.S. 3,329,481 on ill defined titanium silicates but also from the observation (S.M.Kuznicki et al; J. Phys. Chem.; 84; pp. 535-537 (1980)) of TiO2-units in some modified zeolites.

David M. Chapman, in a speech before 11th North American Meeting of the Catalysis Society in Dearborn, Michigan (1989) gave a presentation wherein a titanium aluminosilicate gel was crystallized with Chapman claiming all the aluminum was segregated into analcime (an ultra-small pored aluminosilicate) and not incorporated into any titanium-bearing phase such as his observed analog of the mineral vinogradovite which was a pure titanium silicate. It is noted that vinogradovite, as found in nature, has been reported to contain aluminum. However, neither the synthetic analog of vinogradovite nor the mineral vinogradovite is a molecular sieve.

A major breakthrough in the field of large pored titanium silicate molecular sieves is disclosed and claimed in U. S. Patent 4,853,202. The crystalline titanium silicate large pored molecular sieve of said patent, hereafter designated ETS-10, contains no deliberately added alumina but may contain very minor amounts of alumina due to the presence of impurities. Thus, ETS-10 typically has a molar ratio of $SiO_2/Al_2O_2$ greater than 100 or more.

The present invention relates to a new family of stable molecular sieves which result from:

(1) replacement of at least a portion of the octahedral titanium in either ETAS-10 or ETAS-10 with at least the other octahedral metal atom;
(2) replacement of at least a portion of the tetranedral silicon in ETS-10 or the tetranedral silicon and aluminium in ETAS-10 with at least one other tetranedral metal atom; (3) a combination of (1) and (2).

According to the present invention there is provided a crystalline molecular sieve having a pore size of at least 6 Angstrom units and having a composition in terms of mole ratios of oxide as follows :

$$a (1.0 \pm 0.25) M_{2/n}O : XO_\alpha : dZO_\beta : 0\text{-}100 \ H_2O$$

wherein X is at least one octahedral framework atom selected from titanium and mixtures of titanium with one or more of cerium, zirconium, chromium and niobium; Z is at least one tetrahedral framework atom selected from silicon and mixtures of silicon with at least one other tetrahedral framework atom; M is at least one cation of valence n; $\alpha$ is 1/2 the valence of X; $\beta$ is 1/2 the valence of Z; d is 2-100; a is equal to 1/2 the charge provided by the total of X and Z; and when X is solely titanium then Z is not solely silicon or solely silicon and aluminum.

Z is suitably selected from silicon and mixtures thereof with one or more of aluminium, arsenic, bismuth, boron, beryllium, cobalt, chromium, copper, iron, gallium, germanium, indium, lead, magnesium, manganese, molybdenum, niobium, nickel, phosphorus, antimony, tin, titanium, vanadium, tungsten, and zinc.

In order to account for charge balance, the total cations in the above equation is multiplied by a factor designated as "a" which is 1/2 the sum of the charges provided by the octahedral sites and the tetrahedral sites.

Since both the octahedral atoms X and the tetrahedral atoms Z can be a plurality of atoms, it is necessary to take into consideration both the moles and the valance of a particular metal atom in order to obtain proper charge valance.

For the octahedral sites X, this is accomplished by calculating the moles of each X having a particular valence and proceeding as follows:

(6 - the valence of each X) multiplied by its moles.

Thus, if X was 0.5 moles of titanium $+4$ And 0.5 moles of chromium$^{-3}$, then the total charge contributed by both of the above octahedrally coordinated atoms would be:

For titanium

$$(6 - 4) \times .5 = 1$$

For chromium

$$(6 - 3) \times .5 = 1.5$$

Total charge from x = 1 + 1.5 = 2.5. Thus, its contribution to a is 1/2 of 2.5 or 1.25.

For the tetrahedral sites Z, this is accomplished by calculating the moles of each Z having a particular valence and proceeding as follows:

d multiplied by ( 4 - the valence of each Z) multiplied by its moles. Similarly, if d was 0.5 moles of aluminium$^{-+3}$ and 3.5 moles of silicon$^{-+4}$, then the total charge contributed by both of the above tetrahedrally coordinated atoms would be

For aluminum

$$d (4 - 3) = d$$

For silicon

$$d (4 - 4) = 0$$

Total charge from Z = 0 + d = d. Thus, the contribution to "a" is 1/2 d.

DESCRIPTION OF THE MOST PREFERRED EMBODIMENTS

It is preferred that d is from 2-20 with 2-10 being particularly preferred. It is also preferred that M is a mixture of alkali metal cations in the as-synthesized materials, particularly sodium and potassium.

The following table will illustrate specific molecular sieves of this invention:

TABLE 1

| X | Z |
|---|---|
| Ti | Si+Ga |
| Ti | Si+Al+Ga |
| Ti+Ce | Si |
| Ti+Ce | Si+Al |
| Ti+Ce | Si+Ga |

TABLE 1   (continued)

| X | Z |
|---|---|
| Ti+Ce | Si+Al+Ga |
| Ti+Zr | Si |
| Ti+Zr | Si+Al |
| Ti+Zr | Si+Ga |
| Ti+Zr | Si+Al+Ga |
| Ti+Cr | Si |
| Ti+Cr | Si+Al |
| Ti+Cr | Si+Ga |
| Ti+Cr | Si+Al+Ga |
| Ti+Nb | Si |
| Ti+Nb | Si+Al |
| Ti+Nb | Si+Ga |
| Ti+Nb | Si+Al+Ga |
| Ti+Nb | Si+Nb |
| Ti+Nb | Si+Al+Nb |
| Ti+Nb | Si+Ga+Nb |
| Ti+Nb | Si+Al+Ga+Nb |
| Ti | Si+Nb |
| Ti | Si+Al+Nb |
| Ti | Si+Ga+Nb |
| Ti | Si+Al+Ga+Nb |
| Ti | Si+Nb |
| Ti | Si+Al+Nb |
| Ti | Si+Ga+Nb |
| Ti | Si+Al+Ga+Nb |
| Ti | Si+P |
| Ti | Si+Fe |
| Ti | Si+P+Al |
| Ti | Si+Fe+Al |
| Ti+Zr+Ce | Si |
| Ti+Zr+Ce | Si+Al |
| Ti+Zr+Ce | Si+Ga |

The original cations M can be replaced at least in part with other cations by well known exchange techniques. Preferred replacing cations include hydrogen, ammonium, transition metals, rare earth, and mixtures thereof. The novel molecular sieve zeolites have a high degree of thermal stability of at least 150° or higher, thus rendering them effective for use in high temperature processes.

Members of the novel family of molecular sieve zeolites have a crystalline structure and an X-ray powder diffraction pattern substantially the same as ETAS-10 and contain the following significant lines:

TABLE 2

| XRD POWDER PATTERN OF NOVEL MOLECULAR SIEVES (0 - 40° 2 theta) | |
|---|---|
| SIGNIFICANT -SPACING (ANGS.) | I/I, |
| 15.5 = 2.0 | W-M |
| 7.20 = 1.0 (optional) | W-M |
| 4.41 - .05 - 0.25 | W-M |
| 3.60 - .10 - 0.40 | VS |
| 1.28 - .05 - .25 | M-S |

In the above table,

VS - 100

S - 40-60

M = 20-40

W = 5-20

The above values and values later mentioned were collected using standard techniques on a Phillips APD3720 diffractometer equipped with a theta compensator. The theta compensator maintains a constant area of illumination on the sample, so X-ray intensities obtained from a theta compensated unit are not directly comparable to those of a non-compensated unit. Thus, all values mentioned in the specification and claims were determined by said theta compensated X-ray equipment. The radiation was the K-alpha doublet of copper, and a scintillation counter spectrometer was used. The peak heights, I, and the positions as a function of 2 times theta, where theta is the Bragg angle, were read from the spectrometer chart. From these, the relative intensities, $100 \ I/I_o$, where $I_o$ is the intensity of the strongest line or peak, and d (obs.) the interplanar spacing in A, corresponding to the recorded lines, were calculated. It should be understood that this X-ray diffraction pattern is characteristic of all the compositions. Ion exchange of the sodium ion and potassium ions with cations reveals substantially the same pattern with some minor shifts in interplanar spacing and variation in relative intensity. Other minor variations can occur depending on the ratio of the X to Z of a particular sample, the various metals in the framework, as well as if it had been subjected to thermal treatment.

The novel molecular sieves can be prepared from a reaction mixture containing a source of at least one metal capable of being octahedrally coordinated and also containing a source of at least one metal capable of being tetrahedrally coordinated in the framework structure, a source of alkalinity such as an alkali metal hydroxide, water and, optionally, an alkali metal fluoride mineralizer having a composition in terms of mole ratios falling within the following ranges.

TABLE 3

|  | Broad | Preferred | Most Preferred |
|---|---|---|---|
| Z/X | 1-200 | 2-100 | 2-20 |
| $H_2O/Z$ | 2-100 | 5-50 | 5-25 |
| $M_o/Z$ | 0.1-20 | 0.5-10 | 1-5 |

wherein M indicates the cations of valence n derived from the alkali metal hydroxide and fluoride and/or alkali metal salt. The reaction mixture is heated to a temperature of from about 100°C to 250°C for a period of time ranging from about 2 hours to 40 days, or more. The hydrothermal reaction is carried out until crystals are formed and the resulting crystalline product is thereafter separated from the reaction mixture, cooled to room temperature, filtered and water washed. The reaction mixture can be stirred although it is not necessary. It has been found that when using gels, stirring is unnecessary but can be employed. The preferred temperature range is 150°C to 250°C for a period of time ranging from 4 hours to 7 days. Crystallization is performed in a continuous or batchwise manner under autogenous pressure in an autoclave or static bomb reactor. Following the water washing step, the crystalline molecular sieve is dried at temperature of 100 to 600°F for periods up to 20 hours.

It is to be understood that prior to crystallization, the gel resulting from the reaction mixture can be subjected to one or more thermal treatments at temperatures of from about 150°C to 800°C for 1-48 hours. The thermally treated gel is mixed with water and crystallized.

Quite obviously, it is possible to use less caustic of the reactants in the gel than set form in Table 3 and supply these during the crystallization step after the gel has been thermally treated.

The source of metal which is either is octahedrally coordinated or tetrahedrally coordinated can be the appropriate metal salts such as nitrates, sulfates, chlorides, carbonates, etc., as well as solid sources of soluble metals.

The source of alkalinity is preferably an aqueous solution of an alkali metal hydroxide, such as sodium hydroxide, which provides a source of alkali metal ions for maintaining electrovalent neutrality and controlling the pH of the reaction mixture within the range of about 10.0 to 12.0 using the technique elaborated in U.S.4,853,202. The alkali metal hydroxide serves as a source of sodium oxide which can also be supplied by an aqueous solution of sodium silicate for silicon containing molecular sieves.

The crystalline molecular sieve as synthesized can have the original components thereof replaced by a wide variety of others according to techniques well known in the art. Typical replacing components would include hydrogen, ammonium, alkyl ammonium and aryl ammonium and metals, including mixtures of the same. The hydrogen form may be prepared, for example by substitution of original sodium with ammonium or by the use of a weak acid. The composition is then calcined at a temperature of say, 1000°F causing evolution of ammonia and retention of hydrogen in the composition, i.e., hydrogen and/or decationized form. Of the replacing metals, preference is accorded to metals of Groups II, IV and VIII of the Periodic Table, preferably the rare earth metals.

The crystalline molecular sieves are then preferably washed with water and dried at a temperature ranging from about 100°F to about 600°F and thereafter calcined in air or other inert gas at a temperature ranging from 500°F to 1500°F for periods of time ranging from 1/2 to 48 hours or more.

Regardless of synthesized form of the molecular sieves, the spatial arrangement of atoms which form the basic crystal lattices remain essentially unchanged by the replacement of sodium or other alkali or alkaline earth metal or by the presence in the initial reaction mixture of metals in addition to sodium, as determined by an X-ray powder diffraction pattern of the resulting molecular sieves. The X-ray diffraction patterns of such products are essentially the same as those set forth in Table 2 above (with the exception that the 7.20 ± .15 A line is sometimes no observed).

The crystalline molecular sieves prepared in accordance with the invention are formed in a wide variety of particular sizes. Generally, the particles can be in the form of powder, a granule, or a molded product such as an extrudate having a particle size sufficient to pass through a 2 mesh (Tyler) screen and be maintained on a 400 mesh (Tyler) screen in cases where the catalyst is molded such as by extrusion. The composition can be extruded before drying or dried or partially dried and then extruded.

Sometimes, it is desired to incorporate the new crystalline molecular sieves with another material resistant to the temperatures and other conditions employed during use. Such materials include active and inactive materials and synthetic and naturally occurring zeolites as well as inorganic materials such as clays, silica and/or metal oxides. The latter may be either naturally occurring or in the form of gelatinous precipitates or gels including mixtures of silica and metal oxides. Use of a material in conjunction with the new molecular sieves, i.e., combined therewith which is active, tends to improve the conversion and/or selectivity of the catalyst in certain organic conversion processes. Inactive materials suitably serve as diluents to control the amount of conversion in a given process so that products can be obtained economically and in an orderly manner without employing other means for controlling the rate of reaction. Normally, crystalline materials have been incorporated into naturally occurring clays, e.g., bentonite and kaolin to improve the crush strength when employed as a catalyst under commercial operating conditions such as hydrocarbob conversion. These materials, i.e., clays, oxides, etc., function as binders for the catalyst. It is desirable to provide a catalyst having good crush strength because in a petroleum refinery the catalyst is often subjected to rough handling which tends to break the catalyst down into powder-like materials which cause problems in processing. These clay binders have been employed for the purpose of improving the crush strength of the catalyst.

Naturally occurring clays that can be compositioned with the crystalline molecular sieves described herein include the smectite and kaoline families, which families include the montmorillonites such as sub-bentonites and the kaolin in which the main constituent is kaolinite, halloysite, dickite, nacrite or anauxite. Such clays can be used in the raw state after conventional gritting or they can be subjected to additional processing such as calcination, acid treatment or chemical modification.

In addition to the foregoing materials, the crystalline molecular sieves may be composite with matrix materials such as silica-alumina, silica-magnesia, silica-zirconia, silica-thoria, silica-berylia, silica-titania as well as ternary compositions such as silica-alumina-thoria, silica-alumina-zirconia, silica-alumina-magnesia and silica-magnesia-zirconia. The matrix can be in the form of a cogel. The relative proportions of finally divided crystalline metal organosilicates and inorganic oxide gel matrix can vary widely with the crystalline organosilicate content ranging from about 1 to 90 percent by weight and more usually in the range of about 2 to about 50 percent by weight of the composite.

In addition to the above, the crystalline molecular sieves can be incorporated with a matrix employing in-situ techniques. Thus, for example, when preparing an aluminum-containing material, a forming solution can be prepared as previously described, or the forming solution can contain no aluminum or less aluminium than set forth in Table 3. Quite obviously, it can also contain less caustic or other reactants.

A mixture is formed, as previously described, and to it is added a reactive clay such as metakaolin. The mixture is blended, seeds such as ETAS-10 or ETS-10 may be added and sufficient water introduced in order to be able to spray dry the mixture into microspheres. The microspheres are converted to molecular sieves by adding an aqueous solution of caustic, caustic silicate (if silicon is desired) or water (if sufficient caustic is present) and crystallizing the same in an autoclave under autogenous pressure. It is obvious that a portion of the metakaolin can supply a source of aluminium and/or silica.

As is known in the art, it is often desirable to limit the alkali metal content of materials used for acid catalyzed reactions. This is usually accomplished by ion exchange with hydrogen ions or precursors thereof such as ammonium and/or metal cations such as rare earth.

Employing the catalyst of this invention, containing a hydrogenation component, heavy petroleum residual stocks, cycle stocks, and other hydrocrackable charge stocks can be hydrocracked at temperatures between 400°F and 825°F using molar ratios of hydrogen to hydrocarbon charge in the range between 2 and 80. The pressure employed will vary between 10 and 2,500 psig and the liquid hourly space velocity between 0.1 and 10.

Employing the catalyst of this invention for catalytic cracking, hydrocarbon cracking stocks can be cracked at a liquid hourly space velocity between about 0.5 and 50, a temperature between about 550°F and 1100°F, a pressure between about subatmospheric and several hundred atmospheres.

Employing a catalytically active form of a member of the family of molecular sieves of this invention containing a hydrogen component, reforming stocks can be reformed employing a temperature between 700°F and 1000°F. The pressure can be between 100 and 1,000 psig, but is preferably between 200 to 700 psig. The liquid hourly space velocity is generally between 0.1 and 10, preferably between 0.5 and 4 and the hydrogen to hydrocarbon mole ratio is generally between 1 and 20, preferably between 4 and 12.

The catalyst can also be used for hydroisomerization of normal paraffins when provided with a hydrogenation component, e.g. platinum. Hydroisomerization is carried out at a temperature between 200° and 700°F, preferably 300°F to 550°F, with a liquid hourly space velocity between 0.01 and 1, preferably between 0.25 and 0.50 employing hydrogen such that the hydrogen to hydrocarbon mole ratio is between 1:1 and 5:1. Additionally, the catalyst can be used for olefin isomerization employing temperatures between 10°F and 500°F. The catalyst can also be used for the removal of divalent or polyvalent ions such as $Pb+2$ from solutions containing such ions. The method comprises contacting the solution with a catalytically active sieve according to the invention.

Embodiments of the invention will now be described by way of example.

## EXAMPLE 1

In octahedral coordination, Zr(IV) is somewhat larger than Ti(IV). A solution of $TiCl_3$ and $ZrCl_2$ was prepared such that Zr/Ti = 1 and Zr - Ti = 1.06 molar in 20% by HCl. An alakline silicate solution was prepared by blending 1.758.4g of "n"-Brand sodium silicate with 252g of NaOH and 112.4g of KF. 163.2g of the mixed metal solution was thoroughly blended with 312.8g of the silicate solution. This mixture was analogous to a "standard" ETS-10 gel with Zr replacing 1/2 of Ti. A portion of the mixture was autoclaved under autogenous pressure for 48 hours at 200°C. A crystalline product was obtained with an XPD pattern greatly resembling ETS-10 although somewhat upshifted.

|  | ETS-10 | ETS-10 MIXTURE WITH Zr PRESENT |
|---|---|---|
| Largest d-spacing | 14.6 - 14.7 | 14.65 |
| Strongest | 3.60 | .62 |

While not profound, these shifts are outside normal analytical error and indicate some degree of zirconium incorporation.

## EXAMPLE 2

In tetrahedral coordination, Ga(III) is larger than Si(IV) or Al(III). A solution of $TiCl_3$ and $GaCl_3$ was prepared such that Ga/Ti = 0.5 and Ga - Ti = ~1.45 molar in 20% HCl. An alkaline silicate solution was prepared by blending 100.5 g of "N"-brand sodium silicate solution with 21.0 g Na0H and 9.5 g anhydrous KF. The Ti - Ga solution was mixed and thoroughly blended with the alkaline silicate solution and the "pH" was found to be 10.2. To the mixture a solution containing 3.0 g of NaOH in a 4.9 g D.I. water was added and thoroughly blended in order to elevate the "pH" which was then found to be about 10.6. To the mixture was added 0.93 g of calcined ETS-10 type seed. A 15 gram portion of the mixture was autoclaved under autogenous pressure at 200°F for 14 hours. A crystalline product was obtained with an XRD pattern greatly resembling ETS-10, although somewhat upshifted.

|  | ETS-10 | ETS-10 MIXTURE WITH Ga PRESENT |
|---|---|---|
| Largest d-spacing | 14.6 - 14.7 | 14.95 |
| Strongest d-spacing | 3.60 | 1.62 |

As with the octahedral substitution of atoms larger than titanium, the substitution of tetrahedral atoms larger than silicon is seen to "expand" the lattice parameters of ETS-10-type structures.

## EXAMPLE 3

Ce(IV) is larger than Zr(IV) in octahedral coordination and significantly larger than Ti(IV). Framework incorporation would be expected to yield more pronounced upshifts than zirconium.

Example 1 was repeated with the exception that $CeCl_3$ was directly substituted for $ZrCl_4$ on a mole per mole basis in the mixed metal solution. A crystalline product was obtained which contained multiple phases, one of which greatly resembled ETS-10, but with pronounced upshift in XRD peak positions.

|  | ETS-10 | ETS-10 MIXTURE WITH Ce PRESENT |
|---|---|---|
| Largest d-spacing | 14.6 - 14.7 | 15.2 |
| Strongest d-spacing | 3.60 | 3.69 |

These upshifts are pronounced. It is unmistakable that substantial cerium incorporation has occurred in an ETS-10-like crystalline lattice.

## EXAMPLE 4

While examples 1 and 3 demonstrate that atoms which essentially always occur in octahedral coordination in oxides and therefore presumably substitute for octahedral titanium, can be incorporated into ETS-10-like materials, it was decided to test the hypothesis that the noted expansion of lattice planes was occurring by a totally different mechanism than the expansion observed during aluminum incorporation in ETAS-10. If these two expansions were independent, then their effect might well be additive.

To a portion of the remaining gel of Example 1 was added $NaAlO_2$ such that Al/(Ti + Zr) = 0.5. This is empirically equivalent to Example 5 of Ser. No. 07/373,855 (ETAS-10) with Zr substituting for 1/2 of the Ti. Eight gram samples were fortified with varying additions of caustic to accelerate growth. with the addition of approximately 0.35 grams of NaoH to an eight gram charge, a crystalline product resulted which resembled ETAS-10 but with clearly upshifted XRD d-spacings.

|  | ETS-10 | EXAMPLE 1 | ETAS-10 | EXAMPLE 4 |
|---|---|---|---|---|
|  |  |  | (Al/Ti=.5) |  |
| Largest d-spacing | 14.6 - 14.7 | 14.85 | 14.9 - 15.0 | 15.3 |
| Strongest d-spacing | 3.60 | 3.62 | 3.63 - 3.64 | 3.70 |

Not only are the lattice expansions additive, it appears that the two mechanisms act synergistically. This can be rationalized by aluminium "relaxing" mixed Ti/Zr chains to a higher degree than less constricted pure Ti(IV) chains.

## EXAMPLE 5

To a portion of the remaining gel of Example 2 was added $NaAlO_2$ such that Al/(Ti - Ce) = 0.5. This is empirically equivalent to Example 5 of Ser.No.07/373,855 with Ce substituting for 1/2 of the Ti. Eight gram samples were fortified with varying additions of caustic to accelerate growth. With the addition of approximately 0.25 grams of NaOH to an eight gram charge, a mixed phase crystalline product resulted, a substantial portion of which resembled ETAS-10 but with XRD d-spacings upshifted still further beyond the previous examples.

|  | ETS-10 | EXAMPLE 1 | ETAS-10 | EXAMPLE 5 |
|---|---|---|---|---|
|  |  |  | (Al/Ti=.5) |  |
| Largest d-spacing | 14.6 - 14.7 | 15.2 | 14.9-15.0 | 15.45 |
| Strongest d-spacing | 3.60 | 3.69 | 3.63-3.64 | 3.78 |

Again, the effects of both cerium and aluminum substitution are apparent in lattice expansion. In the case of the strongest peak, an apparent synergy is noted as in the previous example.

Example 6

Cr(III) is insignificantly larger than Ti(IV). A preparation similar to Example 5 of Serial No. 373,855 was prepared with CrCl$_3$ replacing the aluminum source on an equivalent molar basis.

An alkaline silicate solution was prepared from the following reactants:

| | |
|---|---|
| 502.4 g | n-brand sodium-silicate |
| 105.0 g | NaOH |
| 46.4 g | KF (anhydrous) |

A mixed Cr/Ti solution was prepared from the following reactants:

| | |
|---|---|
| 326.4 g | Fisher TiCl$_3$ solution (20% in Acid) |
| 46.4 g | CrCl$_3$.6H$_2$O |

The alkaline silicate and the mixed Cr/Ti solution were thoroughly blended using an overhead stirrer and to the resultant gel was added 4g calcined ETS-10 seed crystals.

The seeded chromium-titanium-aluminum-silicate reactant mixture was autoclaved under autogeneous pressure for 24 hours at 200°C. In this example, the Cr/Ti ratio in the reactant mixture was prepared to be 1:2. A highly crystalline product was obtained whose air-equilibrated d-spacings corresponding to those of ETS-10.

| | ETS 10 | ETS-10 MIXTURE WITH Cr PRESENT |
|---|---|---|
| Largest d-spacing | 14.6 - 14.7 | 14.6 - 14.7 |
| Strongest | 3.60 | 3.60 |

The highly crystalline product of this Example was analyzed by standard wet chemical procedures. The elemental composition and that of ETS-10 are presented below:

| | ETS-10 | | ETS-10-LIKE PHASE WITH OCTAHEDRAL CR(III) SUBSTANTIALLY SUBSTITUTING FOR TI(IV) | |
|---|---|---|---|---|
| | OXIDE WT.% | MMOLES/GM | OXIDE WT.% | MMOLES/GM |
| Si | 61.4 | 9.0 | 58.9 | 8.5 |
| Ti | 22.7 | 2.5 | 13.0 | 1.4 |
| Cr | - | - | 7.1 | 0.8 |
| Na | 13.8 | 3.9 | 13.2 | 3.7 |
| K | 3.1 | 0.6 | 7.8 | 1.4 |
| | | | | |
| Si/Ti | | 3.6 | | 6.0 |
| Si/(Ti+Cr) | | 3.6 | | 3.8 |

In ETS-10 the ratio Na+K/2Ti is 1. For the chromium sustituted material (Na+K)/2Ti+3Cr) = 0.97. Charge balance is only possible if chromium induces a triply charged site. If chromium (III) was simply the cation in standard ETS-10 (Na+K=3Cr)/2Ti to equal unity. The suppression of the titanium content in this highly pure phase as well as the equivalence of Si/(Cr+Ti) in comparison to Si/Ti in ETS-10 leave essentially no doubt that direct substitution of octahedral chromium for titanium has occurred and a triply charged octahedral Cr(III) site generated.

**EXAMPLE 7**

In some cases, the substitution of species other than octahedral titanium or tetrahedral silicon or aluminum in ETS-10 and ETAS-10 structures can be hard to pinpoint from a coordination perspective, although some substitution has clearly occurred. A case in point is niobium wherein tetrahedral Nb(III) or octahedral Nb(V) or mixtures thereof would appear identical from a charge balance perspective.

An alkaline silicate solution was prepared from the following reactants:

| 124.00 g | sodium disilicate solution (SDS) |
| 42.60 g | NaOH |
| 10.45 g | KF (anhydrous) |
| 8.44 g | DI $H_2O$ |

A mixed Nb/Ti/Al solution with a Ti:Nb:Al ratio of 1:1:1 was prepared from the following reactants:

| 10.65 g | $TiCl_4$ |
| 15.20 g | $NbCl_5$ |
| 13.56 g | $AlCl_3 \cdot 6H_2O$ |
| 46.40 g | conc. HCl |
| 0.63 g | Di $H_2O$ |

The alkaline silicate and the mixed Nb/Ti/Al solution were thoroughly blended using an overhead stirrer and to the resultant gel was added 4 g calcined ETS-10 seed crystals. The pH of the resultant gel was 11.6 by our standard dilution method.

Eight grams of the niobium-titanium-aluminum-silicate reactant mixture was mixed with 0.21 g sodium aluminate and 1.79 g DI $H_2O$ and autoclaved under autogeneous pressure for 7 days at 200°C. A highly crystalline product was obtained whose air-equilibrated d-spacings are the following:

| | ETS 10 | ETS-10 MIXTURE WITH Nb and Al PRESENT |
|---|---|---|
| Largest d-spacing | 14.6 - 14.7 | 15.8 |
| Strongest d-spacing | 3.60 | 3.62 |

## EXAMPLE 8

Other synthesis techniques may also be employed that result in larger lattice expansions and presumable higher levels of metal incorporation. One such technique was employed as follows for the incorporation of niobium.

An alkaline silicate solution was prepared from the following reactants:

| 1116.0 g | sodium disilicate solution (SDS) |
| 318.8 g | NaOH |
| 83.6 g | KF (anhydrous) |

A mixed Nb/Ti/Al solution with a Ti:Nb:A1 ratio of 1:1:1 was prepared from the following reactants:

| 85.2 g | $TiCl_4$ |
| 121.4 g | $NbCl_3$ |
| 108.5 g | $AlCl_3$ $6H_2O$ |
| 371.1 g | conc. HC1 |
| 5.0 g | Di $H_2O$ |

The alkaline silicate and the mixed Nb/Ti/Al solution were thoroughly blended using an overhead stirrer and to the resultant gel was added 10.0 g calcined ETS-10 seed crystals. The pH of the resultant gel was 11.6 by our standard dilution method.

The niobium-titanium-aluminum-silicate reactant mixture was placed in a steel tray and dried at 200°C. The dried product was ground to a fine powder and calcined at 500°C for 1 hours. Four grams of the calcined gel was mixed with 6 grams of DI $H_2O$ and autoclaved for 4 days at 200°C. A highly crystalline product was obtained whose air-equilibrated d-spacings are the following:

| | ETS-10 | ETS-10 MIXTURE WITH Nb AND A1 PRESENT |
|---|---|---|
| Largest d-spacing | 14.6 - 14.7 | 16.3 |

(continued)

| | ETS-10 | ETS-10 MIXTURE WITH Nb AND A1 PRESENT |
|---|---|---|
| Strongest d-spacing | 3.60 | 3.62 |

The reason for the profound shift of the lead d-spacing while the strongest peak is only mildly upshifted is not yet known.

## EXAMPLE 9

The niobium-titanium-aluminum-silicate gel similar to that of Example 7 was prepared and crystallized for 6 days at 200°C. The crystalline product was boiled in a 1.0 wt.% NaOH solution for 30 minutes to dissolve amorphous contaminants and subjected to elemental analysis by XRF. Analysis revealed.

| | ETS-10 | | ETS-10-LIKE PHASE WITH NIOBIUM AND ALUMINUM INCORPORATION | |
|---|---|---|---|---|
| | OXIDE WT.% | MMOLES/GM | OXIDE WT% | MMOLES/GM |
| Si | 61.4 | 9.0 | 36.4 | 5.2 |
| Ti | 22.7 | 2.5 | 13.2 | 1.4 |
| Nb | - | - | 19.2 | 1.2 |
| Al | 0.3 | 0.0 | 8.9 | 1.5 |
| Na | 13.8 | 3.9 | 20.1 | 5.6 |
| K | 3.1 | 0.6 | 1.2 | 0.2 |
| | | | | |
| Si/Ti | | 3.6 | | 3.7 |
| Ti/Nb | | - | | 1.2 |
| (Si- A1)/(Ti+Nb) | | 3.6 | | 2.6 |

In ETS-10 the ratio Na+K/2Ti is -1. For the niobium/aluminum substituted material (Na+K)/(2Ti+Nb+A1) = 1.04. It is clear that each niobium induces one framework charge although it is unclear whether this represents octahedral Nb (V) or tetrahedral Nb(III) or a combination thereof. Irrespective of the above, the composition still falls within the formula set forth on page 3 for mole ratio of oxides.

## CONCLUSIONS

We have demonstrated that octahedral atoms other than titanium may be incorporated into ETS-10-like structures. If the substituted atoms are larger than Ti(IV), a lattice expansion results. The lattice defines the crystalline pores of the sieve and with lattice expansion, pore expansion is intuitively obvious. We have demonstrated that this expansion may act additively with lattice expansions induced by appropriate tetrahedral substitutions. In fact, there is reason to believe that a synergistic effect may exist between certain pairs of octahedral and tetrahedral substitutions in ETS-10-like structures as larger octahedral atoms expand octahedral chains and larger tetrahedral "binding" atoms allow the constrained chains to "relax" to a higher degree.

The lattice expansions of Examples 3, 4, 5, 7 and 8 are of significant magnitude. There is little doubt that the pores of these materials are substantially larger than the 8-9 Angstroms of ETS=10.

Other molecular sieves can be prepared in a similar manner by replacing all or a portion of the titanium with at least one octahedrally coordinated metal and/or replacing a portion of the silicon and/or aluminum with at least one other tetrahedrally coordinated metal.

## GLOSSARY OF TERMS

DEFINITIONS, PROCEDURES AND REACTANTS EMPLOYED

- $N^2$ Brand Sodium Silicate is a commercial solution obtained from PQ Corporation. Typical lot analysis would include approximately 29 wt.% $SiO_2$ and 9 wt.% caustic as $Na_2O$, the balance being water.
- SDS (sodium di-silicate) is a commercially used sodium silicate solution in Engelhard FCC operations and was obtained internally. Typically lot analysis would include approximately 27 wt.% $SiO_2$ and 14 wt.% caustic as $Na_2O$, the balance being water.

- Potassium fluoride (KF) was obtained on an anhydrous basis from Pfaltz and Bauer, Inc. Solubility of fluorides in the silicate solutions employed is such that they are only partially dissolved upon mixing, the balance appearing suspended in the silicate mixtures.

- Caustic (NaOH) was obtained as an essentially anhydrous material from Fisher Scientific.

- Titanous Chloride solution ($TiCl_3$) was obtained from Fisher Scientific as 10 wt.% $TiCl_3$ in 20 wt.% HCl, the balance being water yielding a net molality of 1.25 - 1.30 $TiCl_3$.

- Titanium tetrachloride ($TiCl_3$), was obtained as a-99 wt.% liquid from Alpha-Ventron.

- Aluminum trichloride as the nexa-aquated salt ($AlCl_3 \cdot 6H_2O$) was obtained from Fisher Scientific. The aluminum trichloride is completely dissolved in the titanous chloride solution before the mixed metal solution is blended into alkaline silicate mixtures.

- Sodium aluminate ($NaAlO_2$) was obtained cn an essentially anhydrous basis from Pfaltz and Bauer, Inc. Where this reactant is employed as the aluminum source, sodium aluminate is added as a solid to freshly prepared titanium silicate gels and blended until it apparently dissolves.

- Sodium Chloride (NaCl) was obtained as an essentially anhydrous salt from Fisher Scientific. Sodium chloride was added to mixtures of low aluminum content to increase the ion content to a level approaching that of the higher aluminum content mixtures.

- Thoroughly blended refers to gels which have been stirred by overhead stirrers to the point where they visually appear homogeneous. All blending is done at ambient temperature although acid base reactions and base dissolution may temporarily elevate the temperature of the gel.

- All products of the examples are vacuum filtered, washed with an excess of deionized water (at least 10 cc/g) and dried at 200°C for at least 30 minutes prior to any further treatment or testing.

- Air-equilibration is carried out by exposure of dried samples to ambient air for a period of at least one hour.

- Elemental analyses are presented on a volatile free basis as determined by X-ray fluorescence. The X-ray fluorescence sample preparation technique used involves exposure to elevated temperature - typically 1100°C. Thus, the samples presented as ammonium exchanged are in reality the hydrogen form since the said exposure at elevated temperatures converts the samples to some hydrogen form.

- <u>Octahedral coordination</u> - A condition occurring when the metal shares 6 oxygen atoms which impart a charge of -12/2 = -6. Ti(IV), for example, imparts a charge of +4 such that the charge is -2.

- <u>Tetrahedral coordination</u> - A condition occurring when the metal shares 4 oxygen atoms which impart a charge of -8/2 = -4. A1(III), for example, imparts a charge of +3 such that the coordinated aluminium center bears a net charge of -1. On the other hand, a metal with a valence of +4 such as silicon incurred a result in a net charge of -4 +4 of zero.

<u>Pore Size</u> - is defined as the kinetic diameter of the largest molecule substantially (3 wt.% or greater at 1/2 saturation pressure and a temperature of 25°C - 5°C) sorbed from the gas phase by the particular pure molecular sieve. Prior to sorbtion capacity measurements said molecular sieve is activated by heating to 350°C under vacuum or flow of inert gas for a period of at least one hour. For example, toluene is known to have a molecular dimension of about 6 Angstom units, triethylamine about 8 angstrom units and 1,3,5-triisopropylbenzene about 10 angstom units. Thus, the novel molecular sieves of this invention are all capable of sorbing toluene according to the above procedure.

<u>Elemental analysis</u> - The elemental analysis for Examples 6 and 9 are given on a volatile-free weight basis.

## Claims

1. A crystalline molecular sieve having a pore size of at least 6 Angstrom units and having a composition in terms of mole ratios of oxide as follows :

$$a (1.0 \pm 0.25)M2/nO : XO_\alpha : dZO_\beta : 0\text{-}100\ H_2O$$

wherein X is at least one octahedral framework atom selected from titanium and mixtures of titanium with one or more of cerium, zirconium, chromium and niobium; Z is at least one tetrahedral framework atom selected from silicon and mixtures of silicon with at least one other tetrahedral framework atom; M is at least one cation of valence n; $\alpha$ is 1/2 the valence of X; $\beta$ is 1/2 the valence of Z; d is 2-100; a is equal to 1/2 the charge provided by the total of X and Z; and when X is solely titanium then Z is not solely silicon or solely silicon and aluminum.

2. A crystalline molecular sieve according to claim 1 wherein d is 2-20, preferably 2-10.

3. A crystalline molecular sieve according to claim 1 or 2 wherein Z is selected from silicon and mixtures of silicon with one or more of aluminum, arsenic, bismuth, boron, beryllium, cobalt, chromium, copper, iron, gallium, germanium, indium, lead, magnesium, manganese, molybdenum, niobium, nickel, phosphorus, antimony, tin, titanium, vanadium, tungsten, and zinc.

4. A crystalline molecular sieve according to any preceding claim wherein X or Z includes niobium .

5. A crystalline molecular sieve according to any preceding claim wherein M is a mixture of sodium and potassium or comprises hydrogen, rare earth, or gallium.

6. A crystalline molecular sieve according to any preceding claim having an X-ray diffraction pattern as follows:

| XRD POWDER PATTERN (O - 40° 2 theta) | |
|---|---|
| **SIGNIFICANT d-SPACING (ANGS.)** | **$I/I_o$** |
| 15.5 ± 2.0 | W-M |
| 7.20 ± 1.0 (Optional) | W-M |
| 4.41 - .05 + 0.25 | W-M |
| 3.60 - .10 + 0.40 | VS |
| 3.28 - .05 + 0.25 | M-S |

wherein VS = 100, S = 40-60, M = 20-40, and W = 5-20.

7. A process for conversion of an organic compound which comprises contacting the same under conversion conditions with a crystalline molecular sieve according to any preceding claim.

8. A process for catalytic cracking of hydrocarbon which comprises contacting the same with crystalline molecular sieve according to any of claims 1 to 6 at elevated temperature.

9. A process for reforming naphtha which comprises contacting the same in the presence of added hydrogen with hydrogenation/dehydrogenation crystalline molecular sieve according to any of claims 1 to 6 wherein M comprises hydrogen or rare earth.

10. A process for the removal of divalent or polyvalent ions from solution containing the same which comprises contacting said solution with crystalline molecular sieve according to any of claims 1 to 6.

**Patentansprüche**

1. Ein kristallines Molekularsieb mit einer Porengröße von wenigstens 6 Angström-Einheiten und einer Zusammensetzung in Bezug auf Oxidmolverhältnisse wie folgt:
   a (1,0 ± 0,25)M2/nO : $XO_\alpha$ : $dZO_\beta$ : 0-100 $H_2O$ ,
   worin X wenigstens ein oktaedrisches Gerüstatom ist, ausgewählt aus Titan und Mischungen von Titan mit einem oder mehreren der Atome Cer, Zirconium, Chrom und Niob, Z wenigstens ein tetraedrisches Gerüstatom ist, ausgewählt aus Silicium und Mischungen von Silicium mit wenigstens einem anderen tetraedrischen Gerüstatom, M wenigstens ein Kation mit der Valenz n ist, $\alpha$ 1/2 der Valenz von X ist, $\beta$ 1/2 der Valenz von Z ist, d 2-100 ist, a gleich 1/2 der Ladung ist, die insgesamt von X und Z bereitgestellt wird, und, wenn X ausschließlich Titan ist, Z dann nicht ausschließlich Silicium oder nicht ausschließlich Silicium und Aluminium ist.

2. Ein kristallines Molekularsieb gemäß Anspruch 1, worin d 2-20, vorzugsweise 2-10 ist.

3. Ein kristallines Molekularsieb gemäß Anspruch 1 oder 2, worin Z ausgewählt ist aus Silicium und Mischungen von Silicium mit einem oder mehreren der Atome Aluminium, Arsen, Bismut, Bor, Beryllium, Cobalt, Chrom, Kupfer, Eisen, Gallium, Germanium, Indium, Blei, Magnesium, Mangan, Molybdän, Niob, Nickel, Phosphor, Antimon, Zinn, Titan, Vanadium, Wolfram und Zink.

4. Ein kristallines Molekularsieb gemäß irgendeinem vorhergehenden Anspruch, worin X oder Z Niob umfaßt.

**5.** Ein kristallines Molekularsieb gemäß irgendeinem vorhergehenden Anspruch, worin M eine Mischung aus Natrium und Kalium ist oder Wasserstoff, Seltenerden oder Gallium umfaßt.

**6.** Ein kristallines Molekularsieb gemäß irgendeinem vorhergehenden Anspruch mit einem Röntgenbeugungsbild wie folgt:

| RÖNTGENBEUGUNGSPULVERDIAGRAMM (0 - 40° 2 theta) | |
|---|---|
| BEDEUTENDE d-ABSTÄNDE (ANGSTR.) | $I/I_0$ |
| $15,5 \pm 2,0$ | W-M |
| $7,20 \pm 1,0$ (optional) | W-M |
| $4,41 - 0,05 + 0,25$ | W-M |
| $3,60 - 0,10 + 0,40$ | VS |
| $3,28 - 0,05 + 0,25$ | M-S |

wobei VS = 100, S = 40-60, M = 20-40 und W = 5-20.

**7.** Ein Verfahren zur Umwandlung einer organischen Verbindung, welches das Inkontaktbringen derselben unter Umwandlungsbedingungen mit einem kristallinen Molekularsieb gemäß irgendeinem vorhergehenden Anspruch umfaßt.

**8.** Ein Verfahren zum katalytischen Kracken von Kohlenwasserstoff, welches das Inkontaktbringen desselben mit kristallinem Molekularsieb gemäß irgendeinem der Ansprüche 1 bis 6 bei erhöhter Temperatur umfaßt.

**9.** Ein Verfahren zur Reformierung von Benzin, welches das Inkontaktbringen desselben in Gegenwart von zugegebenem Wasserstoff mit einem kristallinen Hydrier/Dehydrier-Molekularsieb gemäß irgendeinem der Ansprüche 1 bis 6 umfaßt, wobei M Wasserstoff und Seltenerden umfaßt.

**10.** Ein Verfahren zum Entfernen von zweiwertigen oder mehrwertigen Ionen aus einer Lösung, die dieselben enthält, welches das Inkontaktbringen der Lösung mit kristallinem Molekularsieb gemäß irgendeinem der Ansprüche 1 bis 6 umfaßt.

## Revendications

**1.** Tamis moléculaire cristallin ayant une dimension de pore d'au moins 6 Angstrom et ayant une composition en termes de rapports molaires d'oxydes représentée par:

$$a (1,0 \pm 0,25) M_{2/n}O : XO_\alpha : dZO_b : 0 \text{ à } 100 H_2O$$

dans laquelle X est au moins un atome de structure octaédrique choisi parmi le titane et des mélanges de titane avec un ou plusieurs atomes de cérium, du zirconium, du chrome et du niobium; Z est au moins un atome de structure tétraédrique choisi parmi le silicium et des mélanges de silicium avec au moins un autre atome de structure tétraédrique; M est au moins un cation de valence n; $\alpha$ est 1/2 de la valence de X; b est 1/2 de la valence de Z; d est 2 à 100; a est égal à 1/2 de la charge fournie par le total de X et Z; et lorsque X est uniquement du titane, alors Z n'est pas uniquement du silicium ou uniquement du silicium et de l'aluminium.

**2.** Tamis moléculaire cristallin suivant la revendication 1, dans lequel d est 2 à 20, de préférence 2 à 10.

**3.** Tamis moléculaire cristallin suivant les revendications 1 ou 2, dans lequel Z est choisi parmi le silicium et des mélanges de silicium avec un ou plusieurs atomes d'aluminium, d'arsenic, de bismuth, de bore, de béryllium, de cobalt, de chrome, de cuivre, de fer, de gallium, de germanium, de l'indium, de plomb, de magnésium, de manganèse, de molybdène, de niobium, de nickel, de phosphore, de l'antimoine, d'étain, de titane, de vanadium, de tungstène et de zinc.

**4.** Tamis moléculaire cristallin suivant l'une quelconque des revendications précédentes, dans lequel X ou Z comprend du niobium.

**5.** Tamis moléculaire cristallin suivant l'une quelconque des revendications précédentes, dans lequel M est un mélange de sodium et de potassium ou comprend de l'hydrogène, une terre rare ou du gallium.

**6.** Tamis moléculaire cristallin suivant l'une quelconque des revendications précédentes, ayant un diagramme de diffraction des rayons X tel que le suivant :

| Diagramme de poudre de diffraction des rayons X (2q = 0 à 40°) | |
| --- | --- |
| Espacement d significatif (Å) | I/Io |
| 15,5 ± 2,0 | W-M |
| 7,20 ± 1,0 (facultatif) | W-M |
| 4,41 - 0,05 + 0,25 | W-M |
| 3,60 - 0,10 + 0,40 | VS |
| 3,28 - 0,05 + 0,25 | M-S |

dans lequel VS = 100, S = 40 à 60, M = 20 à 40, et M = 5 à 20.

**7.** Procédé pour la conversion d'un composé organique qui comprend la mise en contact de celui-ci dans des conditions de conversion avec un tamis moléculaire cristallin suivant l'une quelconque des revendications précédentes.

**8.** Procédé pour le craquage catalytique d'un hydrocarbure qui comprend la mise en contact de celui-ci avec un tamis moléculaire cristallin suivant l'une quelconque des revendications 1 à 6 à une température élevée.

**9.** Procédé pour le reformage d'un naphta qui comprend la mise en contact de celui-ci en présence d'un apport d'hydrogène avec un tamis moléculaire cristallin d'hydrogénation/déshydrogénation suivant l'une quelconque des revendications 1 à 6, dans lequel M comprend de l'hydrogène ou une terre rare.

**10.** Procédé pour l'élimination d'ions divalents ou polyvalents d'une solution contenant ceux-ci, qui comprend la mise en contact de cette solution avec un tamis moléculaire cristallin suivant l'une quelconque des revendications 1 à 6.